# EUROPEAN PATENT APPLICATION

(11) **EP 1 677 238 A1**
(43) Date of publication of application: **05.07.2006**
(21) Application number: 05028226.8
(22) Date of filing: 22.12.2005
(51) Int. Cl.: G06Q 10/00

(54) **Email reply consolidation**

(30) Priority: 28.12.2004 US 24057
(71) Applicant: SAP AG, 69190 Walldorf (DE)
(72) Inventor: Schulz, Karsten, Middle Park Queensland 4074 (AU); Vollrath, Jürgen, Palo Alto California 94304 (US)
(74) Representative: Müller-Boré & Partner Patentanwälte

(57) **Abstract**

A system, method and apparatus is provided for email reply consolidation. In one embodiment, the invention is a method. The method includes grouping a set of emails into a set of conversations. Additionally, the method includes ordering the emails of a conversation of the set of conversations based on a timecode of each of the emails. Moreover, the method includes comparing emails within the conversation of the set of conversations to determine if emails of the conversation include other emails of the conversation. Also, the method includes marking emails of the conversation as included responsive to the comparing.

## Description

### FIELD

The invention, in various embodiments, relates generally to computer software, and more specifically to email client software.

### BACKGROUND

In general, email is a useful tool for business and personal communications. It allows for editing of communications, relatively quick communication, and viewing or reply at a time and place chosen by the recipient. With the expansion of the internet and world wide web, email has become a ubiquitous and necessary part of business, and a significant part of personal lives as well. For e-commerce, email is a vital part of the process in many instances, such as through use of confirming emails for purchases of goods or advertisement of offered goods and services.

Similarly, for internal business purposes, email communication can be vital. Executives can send emails to subordinates and get quick or immediate responses with up-to-date information. Similarly, team members can discuss matters via email, providing both a forum for communication about various issues and a log of what was said. In particular, the log of comments can be useful to retrieve ideas initially not chosen which may later be reconsidered.

Unfortunately, email also provides a number of disadvantages. For example, a steady stream of emails arriving in drip-like fashion can distract from other productive work employees may be expected to perform. Likewise, searching through a set of emails on a topic to find a particular comment or discussion can be time-consuming and frustrating. Email also produces issues in terms of use of bandwidth (email can have large overhead for example), and use of storage media resources - all of the email messages must be stored somewhere, and must also be stored multiple times in store-and-forward networks. Moreover, expansion of stored email multiplies the complexity of searches through email messages - the more email messages to search, the slower the search.

The logging or recording functions of email are very useful. Keeping track of email to take advantage of those functions adds extra work which detracts from otherwise productive efforts of employees. Thus, it may be useful to allow for effective organization of emails. Users presently can organize email manually, such as by grouping emails in folders, for example. However, grouping emails automatically may ease burdens on email users, and may thus be desirable. Furthermore, reducing email storage requirements may also be useful.

### SUMMARY

A system, method and apparatus is provided for email reply consolidation. In one embodiment, the invention is a method. The method includes grouping a set of emails into a set of conversations. Additionally, the method includes ordering the emails of a conversation of the set of conversations based on a timecode of each of the emails. Moreover, the method includes comparing emails within the conversation of the set of conversations to determine if emails of the conversation include other emails of the conversation. Also, the method includes marking emails of the conversation as included responsive to the comparing.

In an alternate embodiment, the invention is a system. The system includes a processor. The system also includes a memory, a user interface, and a network interface each coupled to the processor. The system further includes an email client operated by the processor. The system also includes an email grouping module and an email comparison module operated by the processor.

In yet another alternate embodiment, the invention is a method. The method includes grouping a set of emails into a set of conversations. The method also includes comparing emails within a conversation of the set of conversations to determine if emails of the conversation include other emails of the conversation. The method further includes marking emails of the conversation as included responsive to the comparing.

Methods of the embodiments may be performed by a processor responsive to execution by the processor of a set of instructions, with the instructions embodied in a machine-readable medium. The invention may also be a machine-readable medium embodying instructions, which, when executed by a processor, cause the processor to perform the method, in some embodiments.

It will be appreciated that the present invention is described below using specific examples that are not intended to limit the invention. The systems and methodology may be applied to a broad range of other computer applications. Therefore these and other advantages and aspects of the present invention will become apparent to those skilled in the art upon a reading of the following detailed description and a study of the drawing figures.

### BRIEF DESCRIPTION OF THE DRAWINGS

The present invention is illustrated in an exemplary manner by the accompanying drawings. The drawings should be understood as exemplary rather than limiting, as the scope of the invention is defined by the claims.

Fig. 1 illustrates an embodiment of a system in which email is utilized.

Fig. 2 illustrates an embodiment of a set of email messages organized in conversational fashion.

Fig. 3 illustrates an embodiment of a set of email messages from a conversation.

Fig. 4A illustrates an embodiment of a table of messages of a conversation.

Fig. 4B illustrates an alternate embodiment of a table of messages of a conversation.

Fig. 5 illustrates another embodiment of a set of email messages from a conversation.

Fig. 6 illustrates another embodiment of a table of messages of a conversation.

Fig. 7 illustrates an embodiment of a method of processing messages of a conversation.

Fig. 8A illustrates an embodiment of a method of evaluating inclusion of a message in another message.

Fig. 8B illustrates an alternate embodiment of a method of evaluating inclusion of a message in another message.

Fig. 9 illustrates yet another alternate embodiment of a method of evaluating inclusion of a message in another message.

Fig. 10 illustrates an embodiment of a network in which email usage may occur.

Fig. 11 illustrates an embodiment of a machine with which email may be used.

Fig. 12 illustrates an embodiment of a machine-readable medium.

### DETAILED DESCRIPTION

A system, method and apparatus is provided for email reply consolidation. Email reply consolidation may be implemented, in some embodiments, by grouping emails into conversations and then comparing emails to determine which emails are included in other emails. Emails which are included in other emails need not be retained. In some embodiments, inclusion need not reach 100%, partial inclusion of an email in another email may be sufficient to justify allowing deletion or marking of the included email. Emails and email messages may generally be understood as terms referring to a document or collection of data transmitted between users of computers, typically by email clients or email programs.

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments.

In one embodiment, the invention is a method. The method includes grouping a set of emails into a set of conversations. Additionally, the method includes ordering the emails of a conversation of the set of conversations based on a timecode of each of the emails. Moreover, the method includes comparing emails within the conversation of the set of conversations to determine if emails of the conversation include other emails of the conversation. Also, the method includes marking emails of the conversation as included responsive to the comparing.

The method may further include deleting emails of the conversation of the set of conversations marked in the marking. The comparing may involve a statistical comparison of text of the emails. Alternatively, the comparing may involve a comparison of fields of the emails.

In an alternate embodiment, the invention is a system. The system includes a processor. The system also includes a memory, a user interface, and a network interface each coupled to the processor. The system further includes an email client operated by the processor. The system also includes an email grouping module and an email comparison module operated by the processor.

The system may further include means for interfacing between the email grouping module and the email client. The system may also include an email evaluation module operated by the processor. The system may include an interface between the email client, the email grouping module and the email comparison module.

In yet another alternate embodiment, the invention is a method. The method includes grouping a set of emails into a set of conversations. The method also includes comparing emails within a conversation of the set of conversations to determine if emails of the conversation include other emails of the conversation. The method further includes marking emails of the conversation as included responsive to the comparing.

Also, the method may include deleting emails of the conversation marked in the marking. Moreover, the method may include ordering the emails of the conversation based on a timecode of each of the emails. Additionally, the method may involve the comparing proceeding by comparing older emails with a recent email to determine if the older emails are included in the recent email.

The comparing of the method may include a statistical comparison of text of the emails. Alternatively, the comparing of the method may include an ontological comparison of text of the emails. The comparing of the method may also include the comparing includes a comparison of fields of the emails. The comparing may produce a positive result when an entire email is included in another email. Similarly, the comparing may produce a positive result when a portion of an email included in another email exceeds a predetermined threshold.

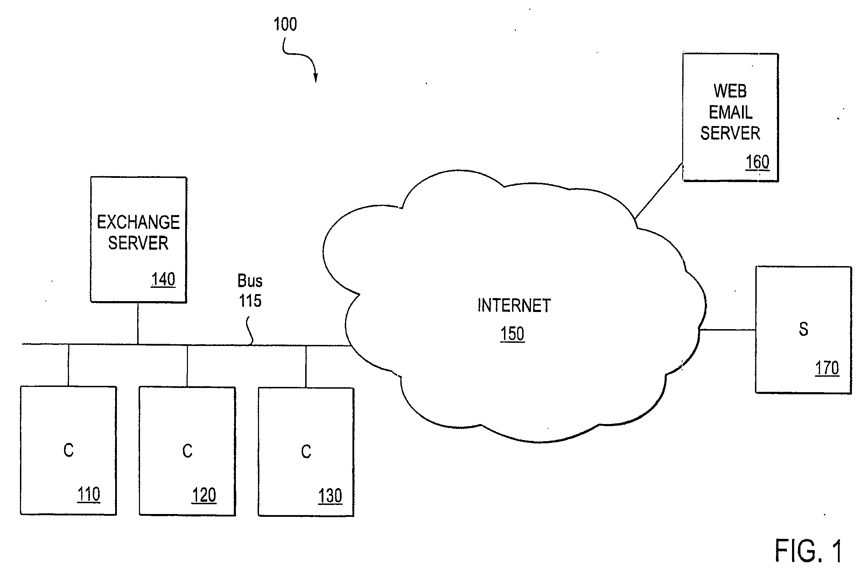

Various systems may be used in conjunction with email, and thus in conjunction with email reply consolidation. Thus, it may be useful to provide an example of such a system. Fig. 1 illustrates an embodiment of a system in which email is utilized. System 100 includes several computers, a network, an Exchange® server, an external network, a web email server and an external server. Thus, system 100 resembles in a general sense the view of an email network from the point of view of a local installation.

Computers 110, 120 and 130 may be expected to be computers used by users to conduct business. Thus, a first user at computer 110 may send an email message to a second user at computer 120, for example. Communication between computers 110, 120 and 130 occurs through network 115, which may be a local area network such as Ethernet or Bluetooth, for example. For emails in particular, communication also involves Exchange® server 140, a server dedicated to processing Outlook® email messages within a network. Other servers may be available, particularly for other email communication systems, and more generic email servers may be employed in some instances as well.

Thus, one may expect that an email from the first user at computer 110 to the second user at computer 120 would travel from computer 110 to network 115, to Exchange server 140, to network 115 again, and finally to computer 120. The second user of computer 120 may then reply, sending a message with comments and the original message included back to the first user at computer 110. If a third user at computer 130 is copied on the first message, that third user will likely be copied on the reply from the second user, too. This is all internal email, and it already is generating much data which must be transmitted (tying up network bandwidth) and stored (tying up storage resources). Reducing use of storage resources may thus be a useful option.

Emails can get more involved, bulky, and thus resource-consuming, when traveling outside a local network. The first user at computer 110 may send an email to a fourth user. The fourth user may be at a different company or otherwise not served by the local network 115 and local Exchange server 140. If, for example, the fourth user is served by server 170, a more complicated operation is required to send the email message.

For example, a message from the first user at computer 110 to a fourth user served by server 170 may require: transmission from computer 110 to network 115, then to Exchange server 140 - where the email is recognized as having an external destination. The email is then transmitted again to network 115, and then to internet 150 (or a similar external network), potentially through a gateway (not shown). Based on an identified destination for the email message, it may then be transmitted to web email server 160, which may be expected to determine how to get the message to its ultimate destination. The email message may then be transmitted to internet 150 again, with resolved addressing information, and then to server 170, from which it will be delivered to the fourth user.

Needless to say, all of these transmissions require overhead in the form of a header for the email, detailing where the email came from, where it is going to, how it got to where it is, and how it is getting to its destination. To make this worthwhile, the email also includes a payload or content which is to be conveyed to the user at the destination.

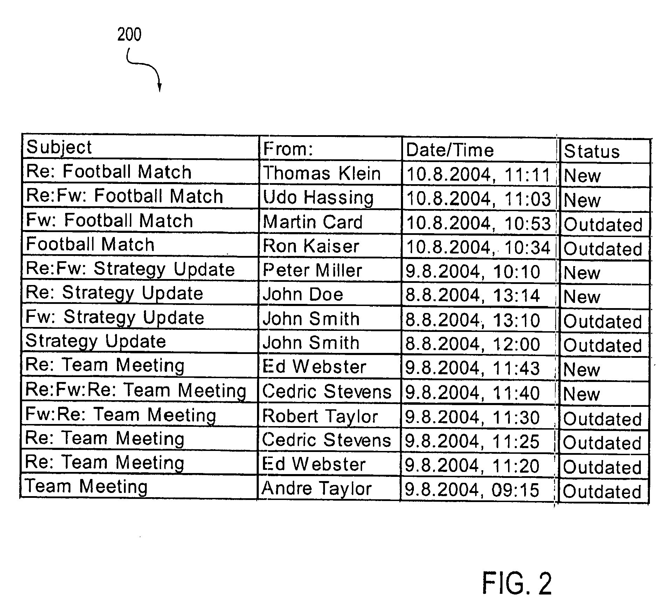

Users may receive many emails, and send many emails, related to a variety of topics. Fig. 2 illustrates an embodiment of a set of email messages organized in conversational fashion. Email messages may be organized in a variety of ways within a user's computer and storage resources. For example, a typical email inbox includes emails listed in order of receipt, and has a separate list of emails sent (if they are saved) in order of departure.

Table 200 illustrates a conversational organization of messages. Messages with similar subject lines are organized together, without regard to Re: or Fw: subject lines, for example. Rather than segregating sent and received email, incoming and outbound email messages are grouped together. Moreover, rather than organizing messages by timestamps, senders or recipients, the subjects of the emails are used as the organizing principle or key.

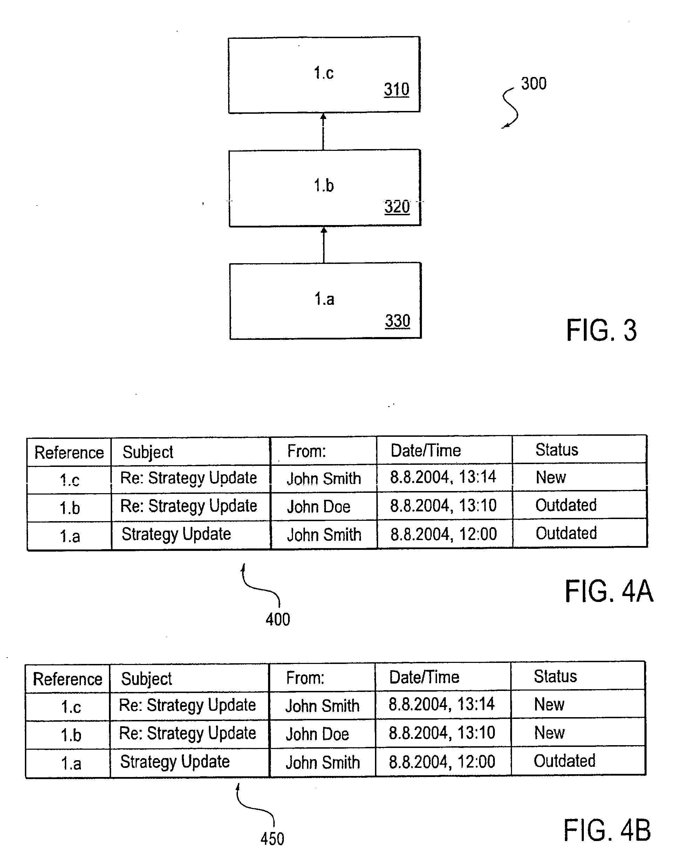

With emails organized in a conversation-based manner, options for reducing the number of retained emails are available. Fig. 3 illustrates an embodiment of a set of email messages from a conversation. Email set 300 is an exemplary set of email messages in a conversation - having a generally common subject matter from one message to the next. Email message 1A (330) originates the conversation, though it may represent the oldest message retained in the conversation as well. Email message 1B (310) is a succeeding email in the conversation, a reply to email message 1A. Email message 1C (310) is an email succeeding email message 1B in the conversation. Typically, each email message replies to all recipients of a preceding email message, and contains most or all of the contents of the preceding message. Thus, message 320 may include essentially all of message 330, and message 310 may include all or essentially all of message 320 (and thus of message 330).

The messages of email set 300 may also be represented in tabular form (as they may be viewed in a computer email client for example). Fig. 4A illustrates an embodiment of a table of messages of a conversation. Table 400 displays the messages of email set 300, including a reference tag, a subject, sender, timestamp, and status of the email. Note that the reference tag and status may or may not be displayed in an email client, for example. Furthermore, other fields may be displayed, such as size or recipient, for example.

With the messages thus displayed, one may understand how messages are sorted and retained or discarded. Messages may be organized in terms of conversations and then within conversations in terms of when the messages are received. Then, older messages may be compared with newer messages to determine if content from the older messages is in the newer messages. If so, the older messages need not be maintained. If not, it may be preferable to maintain the older message(s).

Status of the messages is set to New or Outdated in the present embodiment. New messages in this embodiment indicate those messages that should be retained (at the present time). Outdated messages indicate those messages that need not be maintained, as they are duplicative of portions of the New message(s).

Fig. 4A illustrates an instance where all messages contain information from all previous messages. Fig. 4B illustrates an alternate embodiment of a table of messages of a conversation. Table 450 also includes the messages of email set 300, including a reference tag, a subject, sender, timestamp, and status of the email. However, here message 1B is still marked as New. This may occur because message 1C did not include the contents of message 1B. For example, some users choose not to include prior messages in replies. Alternatively, message 1C may have been sent prior to receipt of message 1B by a user, such as because the user thought of a related comment to send, for example. Thus, when comparing message 1B to message 1C, contents of message 1B are not found in message 1C, and message 1B is not marked Outdated.

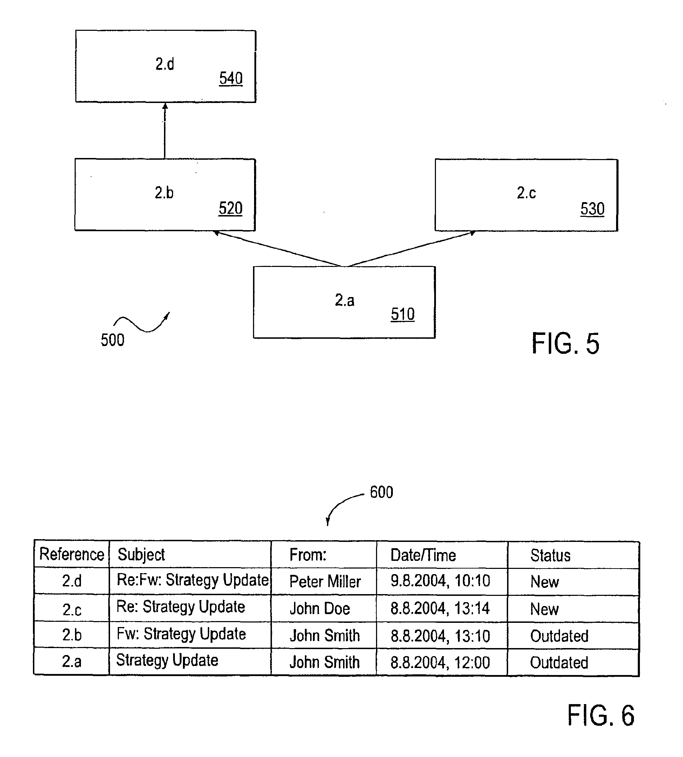

While email set 300 provided a simple linear conversation, such examples are not universally available. Fig. 5 illustrates another embodiment of a set of email messages from a conversation. Email set 500 provides a conversation in which the emails branch into multiple paths. This may occur as a result of two people separately replying to the same email message without the benefit of the other's comments, for example. Other scenarios may result in a similar situation, such as when an email is forwarded on to someone at a time when someone else is replying to the email, for example.

Email set 500 illustrates a situation in which a first email 2A (510) is sent. Email 2B (520) is then sent, potentially as a forward of email 2A (510) or as a reply. Email 2C (530) is also sent, without including the contents of email 2B (520). Email 2D (540) is sent, including the contents of email 2B (520), but not the contents of email 2C (530). Email 2D (540) may be a reply responsive to email 2B (520), for example.

From the scenarios described for email set 500, a corresponding table of messages may also be understood. Fig. 6 illustrates another embodiment of a table of messages of a conversation. Email 2A is an original email sent to a set of recipients. Email 2B is a forwarded message, potentially including email 2A. Email 2C is a reply message to email 2A, presumably including email 2A. Email 2D is a reply message to email 2B, presumably including email 2B. Thus, emails 2A and 2B are marked as outdated in this embodiment, presumably because most or all of the content of these messages are included in emails 2C and 2D. Note also that emails 2A and 2B are both from the same sender, thus suggesting the sender decided to forward message 2A to an additional recipient as message 2B, and further reinforcing the likelihood that message 2B included message 2A.

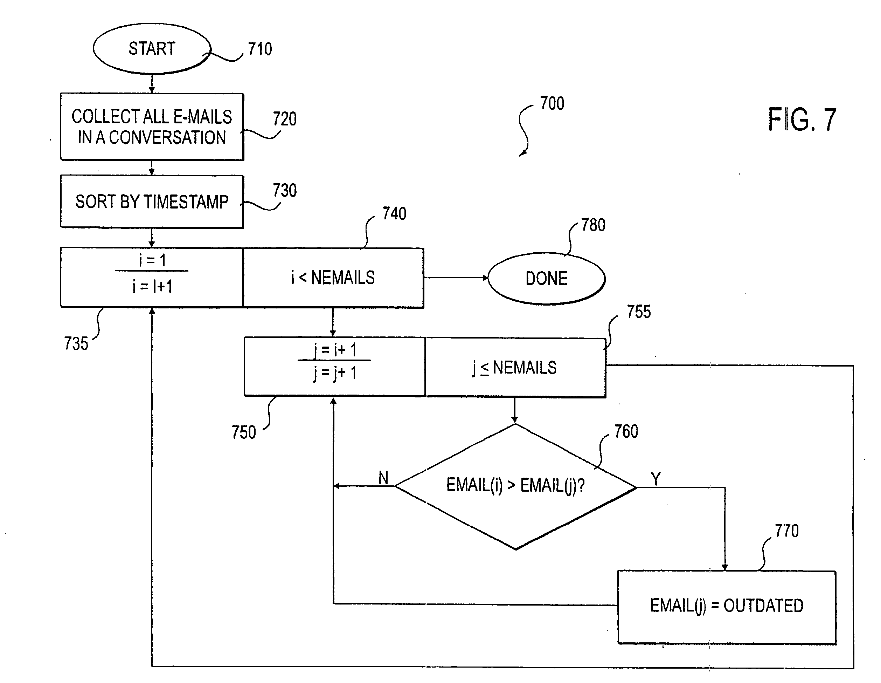

Determining whether messages are outdated or not may be a difficult task, as it requires determining if materials from the messages are contained in other messages. Fig. 7 illustrates an embodiment of a method of processing messages of a conversation. Process 700 includes collecting emails in a conversation, sorting the emails by timestamp, stepping through the emails, for each email determining if the email is included in a later email, and marking included emails as outdated. Process 700 and all processes of this document are composed of a set of modules which may be implemented in a variety of ways. The modules may be parts of a process, they may be software modules embodied in a medium as a set of instructions, and they may be hardware modules which perform according to the process. Moreover, the modules may be rearranged in a more parallel or serial fashion, and may be subdivided or combined.

Process 700 initiates at module 710. At module 720, all emails of a A conversation are collected- such as by collecting all related emails in a mailbox. Emails may be collected based on common subject or common content. Emails with a common subject may be expected to have the same or similar subject lines, typically excluding additions such as Re:, Fw: and similar indicators. Emails with a common content may be expected to be similar on a statistical or ontological basis. Regardless of the basis for grouping emails, the emails are grouped.

At module 730, the grouped emails are sorted based on timestamp or similar coding of date and time in the email, providing an ordered list of emails of a conversation, with newest emails first in one embodiment. A count of emails (an index into the emails - i) is initialized at module 735, and at module 740, a determination is made as to whether the index exceeds the number of emails in the ordered list. If it does, the process terminates at module 780. If the index does not exceed the number of emails in the ordered list, there are still emails to be reviewed for content.

With email messages remaining for review, an index into older emails (a count of older emails - j) is initialized to the index into emails plus one email at module 750, and a determination is made at module 755 as to whether the index into older emails exceeds the number of emails. If it does not exceed the number of emails, a comparison is performed at module 760, determining whether the email being reviewed for content (email [i]) contains the content of the older email being reviewed (email [j]). 1f so, the older email being reviewed is marked as outdated at module 770. Whether the older email being reviewed is outdated or not, the process returns to increment the index into older emails (j) at module 750, and repeats the review of the older email.

When all older emails have been reviewed, index j will exceed the number of emails at module 755, and the process will return to module 735. At module 735, the index into emails (i) is incremented, and the determination of module 740 repeats. Again, if an email remains to be reviewed, the process moves to module 750 and so forth. If index i exceeds the number of emails in the conversation, the process terminates at module 780, as all emails have been reviewed. Note that this process, in some embodiments, may be optimized by determining if older emails have already been marked as outdated and skipping those emails in later reviews. Similarly, outdated emails need not be reviewed to determine if they contain still later emails in some embodiments. At the end of this process, one may expect that all emails which have content contained in a newer email will have been marked as outdated.

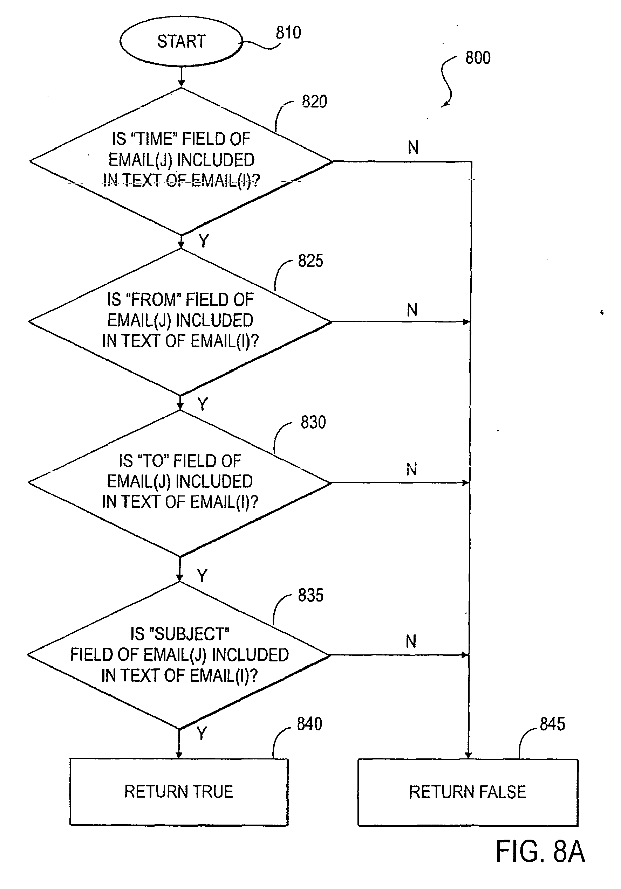

Of some importance in the process of determining if an email is outdated is the question of whether that email is contained in another email. Fig. 8A illustrates an embodiment of a method of evaluating inclusion of a message in another message. Process 800 includes evaluation of time, from and to fields of an email message in another email message to determine inclusion, and provides a Boolean result.

Process 800 commences at module 810. At module 820, a time field from an email(j) is sought in an email(i). If the time field is present (e.g. the time field is strictly included, or is somehow encoded in email(i)), then at module 825, a from field of email(j) is sought in email(i). If the from field is similarly present, then at module 830, a to field of email(j) is sought in email(i). If the to field is also present, then at module 835 a subject field of email (j) is sought in email(i). If the subject field is found, then at module 840 a "True" value is returned (as if from a Boolean function). If any of these tests fails, then at module 845 a "False" value is returned.

Note that in some embodiments, if a time field is present, the message is over 90% likely to contain the contents of the other message, the presence of the from field raises this percentage higher, and the presence of the to field raises the percentage higher still. In other embodiments, the time field indicates 99% likelihood of inclusion, the additional from field indicates 99.9% likelihood, the additional to field indicates 99.99% likelihood and the additional subject field indicates 99.999% likelihood of inclusion..

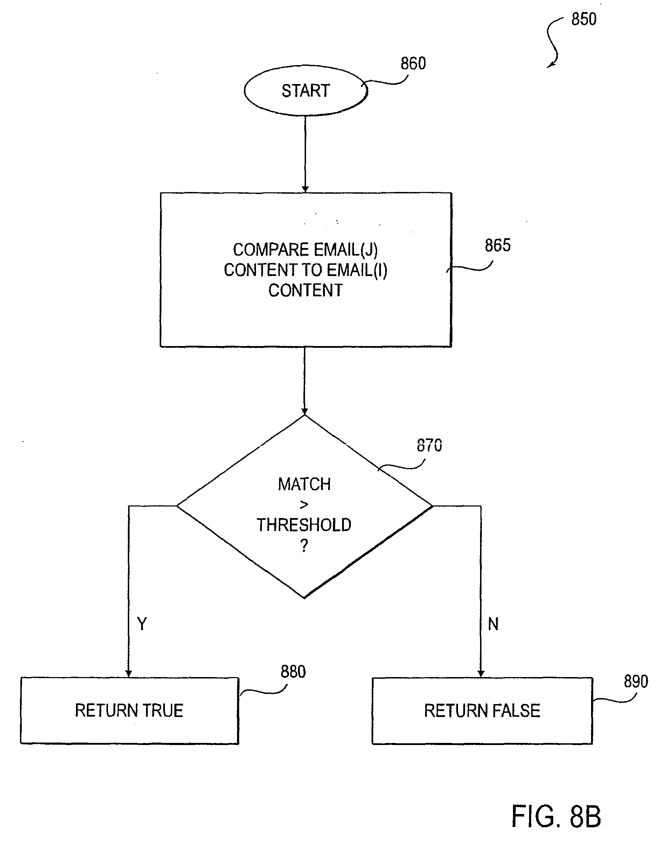

Content may be compared in other ways, too. Fig. 8B illustrates an alternate embodiment of a method of evaluating inclusion of a message in another message. Process 850 includes comparing content of one email message to another email message, determining if the content match exceeds a threshold, and returning a Boolean result responsive to the content match.

Process 850 initiates with module 860. At module 865, content of a first email message is compared to content of a second email message, such as through a statistical comparison of the email messages. If enough content of the first email message is found in the email message, then at module 870 a determination is made that the matching content exceeds a predetermined threshold, and the process returns "True" at module 880. If sufficient content is not found through the comparison of module 865, the process passes from module 870 to module 890, and a "False" result is returned.

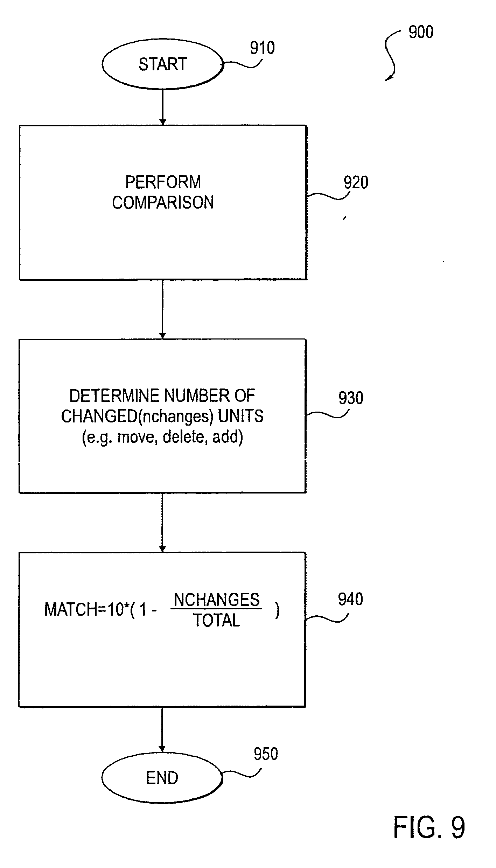

Content evaluation itself may be implemented in a variety of ways. Fig. 9 illustrates yet another alternate embodiment of a method of evaluating inclusion of a message in another message. Process 900 evaluates content similarities between messages, by comparing content, counting changed units, and computing a scalar number based on the number of changed units.

At module 910, process 900 initiates. At module 920, a comparison is performed, resulting in a set of unchanged units and changed units when comparing a first message to a second message. Changes may result from additions, deletions, or moves of text, for example. Such textual comparison is well-known. At module 930, the changed units are counted. At module 940, the changed units are divided by total units of a message, subtracted from 1 (producing a proportion of unchanged units), and multiplied by 10 to produce a scalar match value. A threshold match value may also be set, and the resulting match values may be compared against the threshold (such as in process 850 for example).

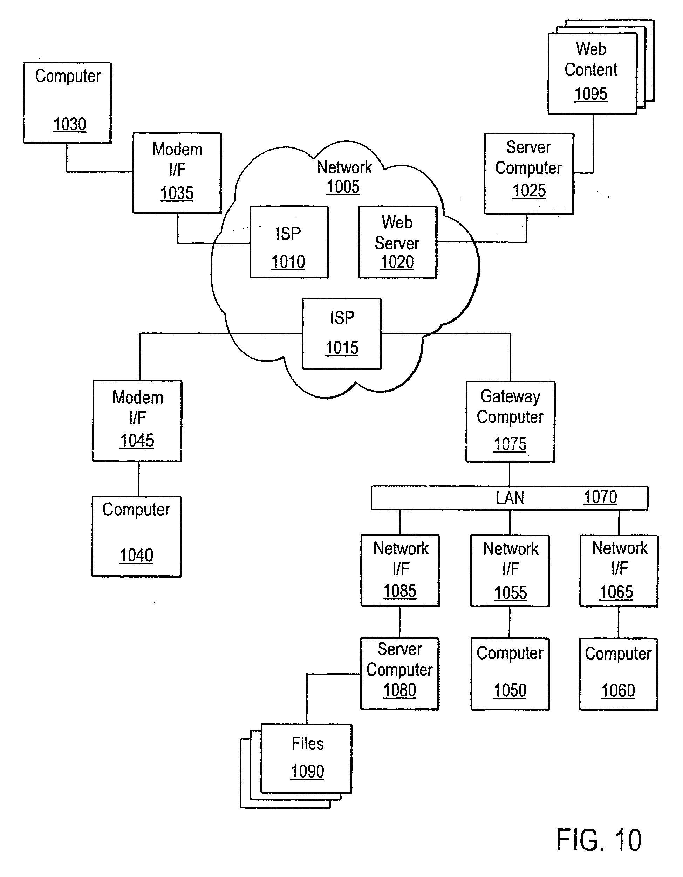

The following description of Figs. 10-11 is intended to provide an overview of computer hardware and other operating components suitable for performing the methods of the invention described above and hereafter, but is not intended to limit the applicable environments. Similarly, the computer hardware and other operating components may be suitable as part of the apparatuses of the invention described above. The invention can be practiced with other computer system configurations, including hand-held devices, multiprocessor systems, microprocessor-based or programmable consumer electronics, network PCs, minicomputers, mainframe computers, and the like. The invention can also be practiced in distributed computing environments where tasks are performed by remote processing devices that are linked through a communications network.

Fig. 10 shows several computer systems that are coupled together through a network 1005, such as the internet. The term "internet" as used herein refers to a network of networks which uses certain protocols, such as the tcp/ip protocol, and possibly other protocols such as the hypertext transfer protocol (HTTP) for hypertext markup language (HTML) documents that make up the world wide web (web). The physical connections of the internet and the protocols and communication procedures of the internet are well known to those of skill in the art.

Access to the internet 1005 is typically provided by internet service providers (ISP), such as the ISPs 1010 and 1015. Users on client systems, such as client computer systems 1030, 1040, 1050, and 1060 obtain access to the internet through the internet service providers, such as ISPs 1010 and 1015. Access to the internet allows users of the client computer systems to exchange information, receive and send e-mails, and view documents, such as documents which have been prepared in the HTML format. These documents are often provided by web servers, such as web server 1020 which is considered to be "on" the internet. Often these web servers are provided by the ISPs, such as ISP 1010, although a computer system can be set up and connected to the internet without that system also being an ISP.

The web server 1020 is typically at least one computer system which operates as a server computer system and is configured to operate with the protocols of the world wide web and is coupled to the internet. Optionally, the web server 1020 can be part of an ISP which provides access to the internet for client systems. The web server 1020 is shown coupled to the server computer system 1025 which itself is coupled to web content 1095, which can be considered a form of a media database. While two computer systems 1020 and 1025 are shown in Fig. 10, the web server system 1020 and the server computer system 1025 can be one computer system having different software components providing the web server functionality and the server functionality provided by the server computer system 1025 which will be described further below.

Client computer systems 1030, 1040, 1050, and 1060 can each, with the appropriate web browsing software, view HTML pages provided by the web server 1020. The ISP 1010 provides internet connectivity to the client computer system 1030 through the modem interface 1035 which can be considered part of the client computer system 1030. The client computer system can be a personal computer system, a network computer, a web tv system, or other such computer system.

Similarly, the ISP 1015 provides internet connectivity for client systems 1040, 1050, and 1060, although as shown in Fig. 10, the connections are not the same for these three computer systems. Client computer system 1040 is coupled through a modem interface 1045 while client computer systems 1050 and 1060 are part of a LAN. While Fig. 10 shows the interfaces 1035 and 1045 as generically as a "modem," each of these interfaces can be an analog modem, isdn modem, cable modem, satellite transmission interface (e.g. "direct PC"), or other interfaces for coupling a computer system to other computer systems.

Client computer systems 1050 and 1060 are coupled to a LAN 1070 through network interfaces 1055 and 1065, which can be ethernet network or other network interfaces. The LAN 1070 is also coupled to a gateway computer system 1075 which can provide firewall and other internet related services for the local area network. This gateway computer system 1075 is coupled to the ISP 1015 to provide internet connectivity to the client computer systems 1050 and 1060. The gateway computer system 1075 can be a conventional server computer system. Also, the web server system 1020 can be a conventional server computer system.

Alternatively, a server computer system 1080 can be directly coupled to the LAN 1070 through a network interface 1085 to provide files 1090 and other services to the clients 1050, 1060, without the need to connect to the internet through the gateway system 1075.

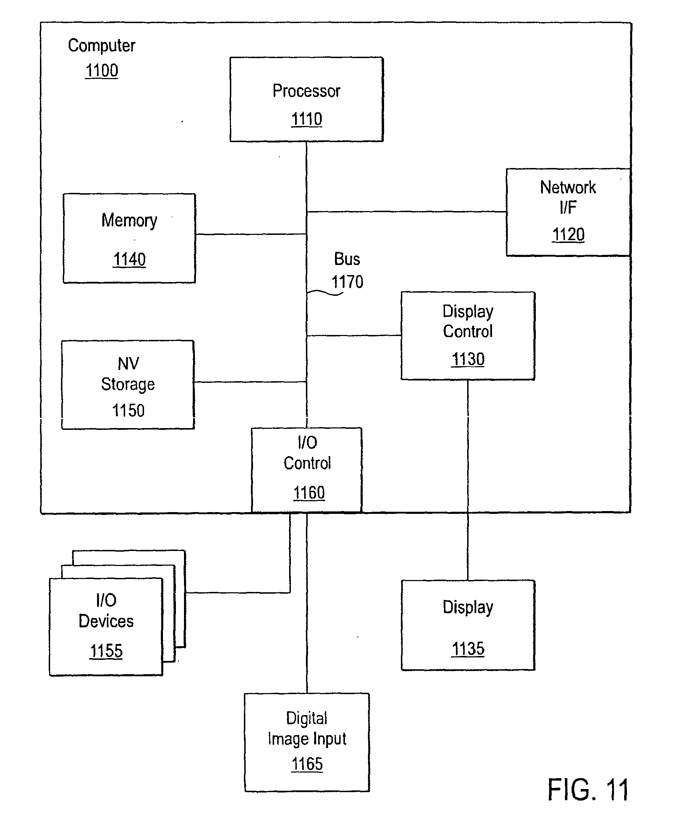

Fig. 11 shows one example of a conventional computer system that can be used as a client computer system or a server computer system or as a web server system. Such a computer system can be used to perform many of the functions of an internet service provider, such as ISP 1010. The computer system 1100 interfaces to external systems through the modem or network interface 1120. It will be appreciated that the modem or network interface 1120 can be considered to be part of the computer system 1100. This interface 1120 can be an analog modem, isdn modem, cable modem, token ring interface, satellite transmission interface (e.g. "direct PC"), or other interfaces for coupling a computer system to other computer systems.

The computer system 1100 includes a processor 1110, which can be a conventional microprocessor such as an Intel pentium microprocessor or Motorola power PC microprocessor. Memory 1140 is coupled to the processor 1110 by a bus 1170. Memory 1140 can be dynamic random access memory (dram) and can also include static ram (sram). The bus 1170 couples the processor 1110 to the memory 1140, also to non-volatile storage 1150, to display controller 1130, and to the input/output (I/O) controller 1160.

The display controller 1130 controls in the conventional manner a display on a display device 1135 which can be a cathode ray tube (CRT) or liquid crystal display (LCD). The input/output devices 1155 can include a keyboard, disk drives, printers, a scanner, and other input and output devices, including a mouse or other pointing device. The display controller 1130 and the I/O controller 1160 can be implemented with conventional well known technology. A digital image input device 1165 can be a digital camera which is coupled to an i/o controller 1160 in order to allow images from the digital camera to be input into the computer system 1100.

The non-volatile storage 1150 is often a magnetic hard disk, an optical disk, or another form of storage for large amounts of data. Some of this data is often written, by a direct memory access process, into memory 1140 during execution of software in the computer system 1100. One of skill in the art will immediately recognize that the terms "machine-readable medium" or "computer-readable medium" includes any type of storage device that is accessible by the processor 1110 and also encompasses a carrier wave that encodes a data signal.

The computer system 1100 is one example of many possible computer systems which have different architectures. For example, personal computers based on an Intel microprocessor often have multiple buses, one of which can be an input/output (I/O) bus for the peripherals and one that directly connects the processor 1110 and the memory 1140 (often referred to as a memory bus). The buses are connected together through bridge components that perform any necessary translation due to differing bus protocols.

Network computers are another type of computer system that can be used with the present invention. Network computers do not usually include a hard disk or other mass storage, and the executable programs are loaded from a network connection into the memory 1140 for execution by the processor 1110. A Web TV system, which is known in the art, is also considered to be a computer system according to the present invention, but it may lack some of the features shown in Fig. 11, such as certain input or output devices. A typical computer system will usually include at least a processor, memory, and a bus coupling the memory to the processor.

In addition, the computer system 1100 is controlled by operating system software which includes a file management system, such as a disk operating system, which is part of the operating system software. One example of an operating system software with its associated file management system software is the family of operating systems known as Windows® from Microsoft Corporation of Redmond, Washington, and their associated file management systems. Another example of an operating system software with its associated file management system software is the Linux operating system and its associated file management system. The file management system is typically stored in the non-volatile storage 1150 and causes the processor 1110 to execute the various acts required by the operating system to input and output data and to store data in memory, including storing files on the non-volatile storage 1150.

Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention, in some embodiments, also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-roms, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language, and various embodiments may thus be implemented using a variety of programming languages.

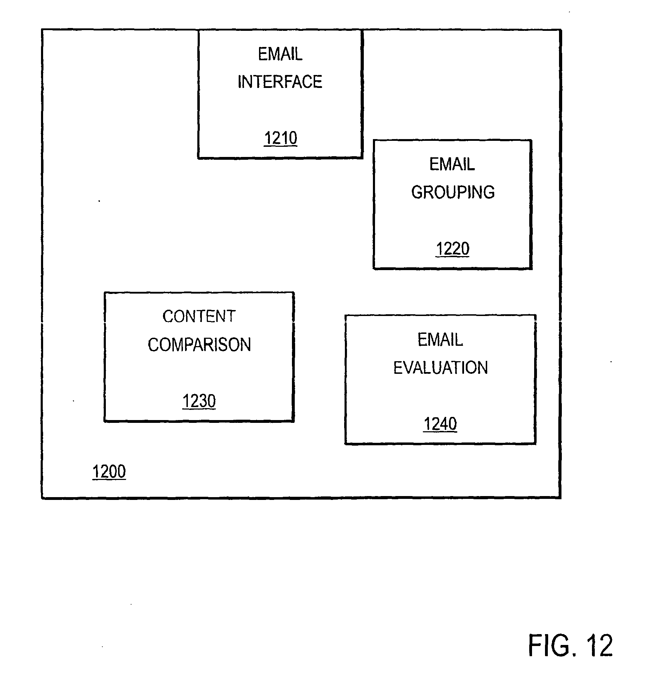

Methods of the invention, or systems or apparatus of the invention, may be embodied in machine-readable media. Fig. 12 illustrates an embodiment of a machine-readable medium. Medium 1200 includes modules which may be implemented as sets of instructions, and may be combined or subdivided in various embodiments. Medium 1200 as illustrated includes an email interface, an email grouping module, a content comparison module, and an email evaluation module.

Medium 1200 may be understood as including parts of a system or apparatus which will operate in various surrounding systems (e.g. computers) for example. Email interface 1210 may operate to pass data to and from an email program such as Outlook/Exchange, for example. Email grouping module 1220 may operate to compare email subjects and timecodes or datestamps to determine which emails are appropriately grouped as conversations - thereby extending functionality of an email client or program. Content comparison module 1230 may operate to compare content of email messages, producing an indication of whether an email message is included in another email message for example.

Email evaluation module 1240 may operate to cycle through a set of email messages, causing pairs of messages to be compared by module 1230, and potentially causing a set of messages to be grouped by module 1220, along with communicating with an email client through interface 1210. Thus, medium 1200 may provide an apparatus which implements the methods of figures such as Figs. 7, 8A, 8B and 9, for example. Similarly, medium 1200 may be useful with system 1100 or 110, or within system 700 for example.

Moreover, features of the various systems and methods may be intermingled. Thus, process 900 may be incorporated into process 850, for example. Similarly, parts of process 850 may be incorporated into process 700, for example. Moreover, each of the processes may be implemented through operation of a system such as system 1100 or systems 110, 120 and 130, for example. Thus, the various features of the various embodiments should be understood as capable of inclusion in other embodiments, whether discussed in this document or otherwise included in the spirit and scope of the invention.

One skilled in the art will appreciate that although specific examples and embodiments of the system and methods have been described for purposes of illustration, various modifications can be made without deviating from the spirit and scope of the present invention. For example, embodiments of the present invention may be applied to many different types of databases, systems and application programs. Moreover, features of one embodiment may be incorporated into other embodiments, even where those features are not described together in a single embodiment within the present document. Accordingly, the invention is described by the appended claims.

## Claims

1. A method, comprising:
grouping a set of emails into a set of conversations;
comparing emails within a conversation of the set of conversations to determine if emails of the conversation include other emails of the conversation;
and
marking emails of the conversation as included responsive to the comparing.

2. The method of claim 1, further comprising:
deleting emails of the conversation marked in the marking.

3. The method of claim 1 or 2, further comprising:
ordering the emails of the conversation based on a timecode of each of the emails.

4. The method of claim 1, 2 or 3, wherein:
the comparing proceeds by comparing older emails with a recent email to determine if the older emails are included in the recent email.

5. The method of anyone of the preceding claims, wherein:
the comparing includes
a statistical and/or an ontological comparison of text of the emails; and/or a comparison of fields of the emails.

6. The method of anyone of the preceding claims, wherein:
the comparing produces a positive result
when an entire email is included in another email; and/or
when a portion of an email included in another email exceeds a predetermined threshold.

7. The method of anyone of the preceding claims, wherein:
the method is performed by a processor executing a set of instructions, the set of instructions embodied in a machine-readable medium.

8. The method of anyone of the preceding claims, further comprising:
ordering the emails of a conversation of the set of conversations based on a timecode of each of the emails.

9. The method of anyone of the preceding claims, further comprising:
deleting emails of the conversation of the set of conversations marked in the marking.

10. A system, comprising:
a processor;
a memory, coupled to the processor;
a user interface coupled to the processor;
a network interface coupled to the processor;
an email client operated by the processor;
an email grouping module operated by the processor;
and
an email comparison module operated by the processor.

11. The system of claim 10, further comprising:
means for interfacing between the email grouping module and the email client.

12. The system of claim 10 or 11, further comprising:
an email evaluation module operated by the processor.

13. The system of claim 10, 11 or 12, further comprising:
an interface between the email client, the email grouping module and the email comparison module.

14. The system of anyone of the claims 10 to 13, wherein the processor is capable of performing operations according to a method of anyone of the claims 1 to 9.

15. A computer program product comprising program code which, when loaded on a data processing device, such as a computer, causes said data processing device to perform operation according to a method of anyone of the claims 1 to 9.
